(19) Europäisches Patentamt European Patent Office Office européen des brevets

(11) **EP 4 016 404 A1**

(12) **EUROPEAN PATENT APPLICATION**

(43) Date of publication:
**22.06.2022 Bulletin 2022/25**

(21) Application number: **20214730.2**

(22) Date of filing: **16.12.2020**

(51) International Patent Classification (IPC):
**G06Q 10/00** (2012.01)

(52) Cooperative Patent Classification (CPC):
**G06Q 10/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED Kanagawa 211-8588 (JP)**

(72) Inventor: **SADOWSKI, Przemyslaw Hayes, Middlesex, UB3 1AJ (GB)**

(74) Representative: **Haseltine Lake Kempner LLP Cheapside House 138 Cheapside London EC2V 6BJ (GB)**

Remarks:
Amended claims in accordance with Rule 137(2) EPC.

(54) **METHOD AND APPARATUS FOR GENERATING A CONTROL SIGNAL TO CONTROL A DEVICE IN ACCORDANCE WITH A CONSTRAINED HIERARCHY**

(57) Generating a control signal comprises: for a weight ratio hierarchy comprising a target weight ratio between weight variables of objects of a hierarchy level, generating a cost function corresponding to the hierarchy which, for an optimal solution of the cost function, a ratio of values for weight variables of the objects in the level will be equal to the target weight ratio; obtaining a constraint related to the weight variables in a formulation supported by an optimization solver; combining the cost function and each obtained constraint in such a way as to obtain an optimization problem which, when input into the optimization solver, may have an optimal, or almost optimal, solution satisfying the constraint; inputting the optimization problem into the optimization solver and obtaining a solution, the solution comprising values for the weight variables; and generating the control signal to control a device in accordance with the solution.

Fig. 5

**Description**

Embodiments relate to a method and apparatus for generating a control signal to control a device in accordance with a constrained hierarchy.

There are many and various technical fields where control signals are determined in accordance with weights which have been assigned to objects according to hierarchical ratios between subsets of objects. In some cases, ratios between values of decision variables have to be as close to target values as possible. Examples where this may be factor include, but are not limited to, control signals for managing the amounts of parts in stock for a complex manufacturing process/retail operator, training ethical AI systems where diverse training sets are needed, determining an optimum portfolio of financial assets, etc.

Current state-of-the-art methods for using hierarchical ratios are based on using machine learning methods for ratios' calculation and deterministic weights computation. However, in some circumstances the deterministic weights computation cannot be easily integrated with any additional constraints on the solution that the user may need.

The only existing workaround is based on post-processing of the output of the unconstrained computation, which works with only a fixed family of simple constraints, and does not allow any flexibility in finding the trade-off between the additional constraints and the computed ratios, or any flexibility on how important particular levels of hierarchy should be.

An embodiment according to a first aspect may provide a computer-implemented method of generating a control signal to control a device comprising: for a given weight ratio hierarchy comprising a predefined hierarchy of a set of objects having at least one level of subsets of the objects, where the subsets in each level have preselected relative weights, the weight ratio hierarchy further comprising at least one target weight ratio between weight variables of objects at the at least one level of the predefined hierarchy, generating a cost function corresponding to the weight ratio hierarchy such that, for an optimal solution of the cost function, a ratio of values for weight variables of the objects in the at least one level will be equal to the at least one target weight ratio for the at least one level; obtaining at least one predefined constraint related to the weight variables in a formulation in accordance with input requirements of an optimization solver to be used in the method; combining the cost function and each encoded constraint in such a way as to obtain an optimization problem which, when input into the optimization solver, may have an optimal, or close to optimal, solution satisfying the at least one predefined constraint; inputting the optimization problem into the optimization solver and obtaining a solution output by the optimization solver, the solution comprising values for the weight variables; and generating the control signal to control the device in accordance with the obtained solution.

Embodiments use optimization solvers which support constraints, instead of a deterministic procedure, to obtain the weights of the objects. In particular, embodiments provide a system for integrating hierarchical ratio requirements with constraints by building an optimization problem, and using an optimizer to solve the problem.

Optimization is the process of finding the best (or close to the best) solution from a set of possible solutions. Combinatorial optimization is a subset of optimization which consists of finding an optimal (or close to optimal) object in a finite set of objects. Examples of combinatorial optimization problems are task scheduling, vehicle routing, portfolio optimization, only to name a few. Most combinatorial optimization problems are very hard to solve in the sense that it would take an impractical amount of time (e.g. years, millennia or more) to obtain the exact optimum. As such, many approximation techniques that obtain a close approximation (usually within a few percent of the exact optimum), but in a practical amount of time (e.g. seconds, minutes, hours or days), have been devised. Examples of such approximate techniques are Simulated (Quantum) Annealing (as used in Fujitsu's Digital Annealer™ for example) or Evolutionary Optimization.

Embodiments provide a solution to the problem of determining a control signal based on hierarchical ratios that includes arbitrary constraints and allows adjusting the trade-off between ratios and constraints as well as adjusting the importance of particular levels of hierarchy.

In a method according to an embodiment, obtaining the solution output by the solver may comprise: evaluating the quality of a solution output by the solver against at least one preset quality criterion; when the quality of the solution does not meet the at least one preset quality criterion, rejecting the solution, changing parameters of the optimization solver, and causing the optimization solver to output another solution; and when the quality of the solution meets the preset quality criterion, determining that the solution is of satisfactory quality.

When the solution is determined to be of satisfactory quality, the method may further comprise: evaluating the performance of the solution against at least one preset performance criterion; when the performance does not meet the at least one preset performance criterion, rejecting the solution, altering the optimization problem by changing at least one of the predefined constraint and the preselected relative weights, and causing the altered optimization problem to be input into the optimization solver; and when the performance meets the at least one preset performance criterion, determining that the solution is acceptable.

An embodiment according to a second aspect may provide a computer program comprising instructions which, when the program is executed by a computer, causes that computer to carry out the method according to the first aspect.

An embodiment according to a third aspect may provide apparatus to generate a control signal to control a device, the apparatus comprising: at least one processor; and at least one memory storing a weight ratio hierarchy comprising a predefined hierarchy of a set of objects having at least one level of subsets of the objects, where the subsets in each level have preselected relative weights, the weight ratio hierarchy further comprising at least one target weight ratio between weight variables of objects at the at least one level of the predefined hierarchy, the at least one memory further storing instructions to cause the processor to: generate a cost function corresponding to the weight ratio hierarchy such that, for an optimal solution of the cost function, a ratio of values for weight variables of the objects in the at least one level will be equal to the at least one target weight ratio for the at least one level; obtain at least one predefined constraint related to the weight variables in a formulation in accordance with input requirements of an optimization solver to be used; combine the cost function and each encoded constraint in such a way as to obtain an optimization problem which, when input into the optimization solver, may have an optimal, or close to optimal, solution satisfying the at least one predefined constraint; input the optimization problem into the optimization solver and obtaining a solution output by the optimization solver, the solution comprising values for the weight variables; and generate the control signal to control the device in accordance with the obtained solution.

In apparatus according to an embodiment, the instructions to cause the processor to obtain the solution output by the solver may comprise instructions to: evaluate the quality of a solution output by the solver against at least one preset quality criterion; when the quality of the solution does not meet the at least one preset quality criterion, reject the solution, change parameters of the optimization solver, and cause the optimization solver to output another solution; and when the quality of the solution meets the preset quality criterion, determine that the solution is of satisfactory quality.

The instructions may further comprise instructions to: evaluate the performance of the solution against at least one preset performance criterion when the solution is determined to be of satisfactory quality; when the performance does not meet the at least one preset performance criterion, reject the solution, alter the optimization problem by changing at least one of the predefined constraint and the preselected relative weights, and cause the altered optimization problem to be input into the optimization solver; and when the performance meets the at least one preset performance criterion, determine that the solution is acceptable.

In a method, program or apparatus according to an embodiment, obtaining the at least one predefined constraint in a formulation in accordance with input requirements of the optimization solver comprises encoding the predefined constraint into a formulation supported by the optimization solver.

In a method, program or apparatus according to an embodiment, each constraint may be in the form of one of an equality and an inequality containing at least one of the weight variables.

In a method, program or embodiment according to an embodiment, the weight ratio hierarchy may comprise target weight ratios between weight variables of objects at each level of the predefined hierarchy, and generating a cost function corresponding to the weight ratio hierarchy may comprise determining values for weight variables of the objects in each level such that, for each level, a ratio of weight variables of objects in the level is equal to the target weight ratio for the level.

In a method, program or apparatus according to an embodiment, the objects may be parts of an item to be manufactured and the device may control a process used in manufacturing the item.

Alternatively, in a method, program or apparatus according to an embodiment, the objects may be data points for use in training an AI system and the device may be for use in training an AI system.

Alternatively, in a method, program or apparatus according to an embodiment, the objects may be financial assets and the device may be a financial portfolio management system.

In the detailed description an explicit method for building a formulation for the optimization problem of calculating the weights corresponding to a given weight ratio hierarchy is given. However, the provided formulas are just an example that may work for most optimization solvers, but not all of them, and as such are not essential.

Reference will now be made, by way of example, to the accompanying drawings in which:

Figure 1 is a block diagram of apparatus according to an embodiment;
Figure 2 is a block diagram of system architecture including apparatus according to an embodiment;
Figure 3 is a flowchart of a method carried out by the architecture of Figure 2;
Figures 4(a) and (b) illustrate a weight ratio hierarchy;
Figure 5 is a flowchart of a method according to an embodiment;
Figure 6 is a block diagram of an exemplary system in which apparatus according to an embodiment may be used; and
Figure 7 is a block diagram of a computing device suitable for carrying out a method according to an embodiment.

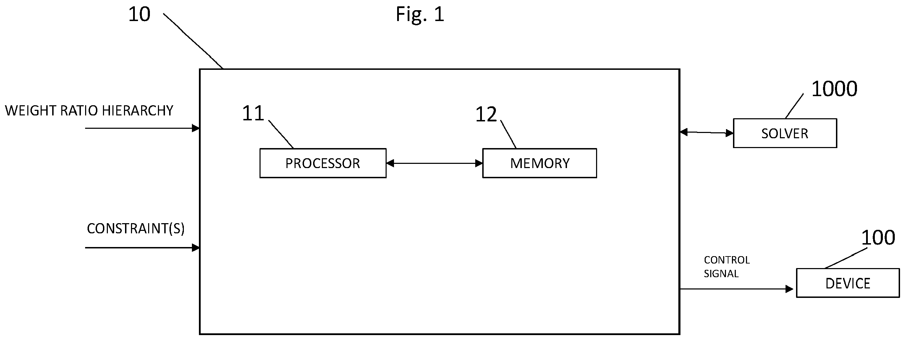

Figure 1 shows apparatus 10 for generating a control signal to control a device 100 in accordance with a constrained hierarchy. The apparatus 10 comprises a processor 11 and a memory 12 and communicates with an optimization solver 1000. Memory 12 stores a weight ratio hierarchy (also referred to herein as Weights Ratios' Hierarchy) input into the apparatus, along with at least one predefined constraint. The weight ratio hierarchy comprises a predefined hierarchy of a set of objects having at least one level of subsets of the objects, where the subsets in each level have preselected relative weights The weight ratio hierarchy further comprises at least one target weight ratio between weight variables of objects at the at least one level of the predefined hierarchy. Memory 12 further stores instructions to cause the processor 11 to perform the following processes:

(a) generate a cost function corresponding to the weight ratio hierarchy such that, for an optimal solution of the cost function, a ratio of values for weight variables of the objects in the at least one level will be equal to the at least one target weight ratio for the at least one level;
(b) obtain at least one predefined constraint related to the weight variables in a formulation in accordance with input requirements of the optimization solver 1000;
(c) combine the cost function and each encoded constraint in such a way as to obtain an optimization problem which, when input into the optimization solver 1000, may have an optimal, or close to optimal, solution satisfying the at least one predefined constraint;
(d) input the optimization problem into the optimization solver 1000 and obtain a solution output by the optimization solver 1000, the solution comprising values for the weight variables; and
(e) generate the control signal to control the device 100 in accordance with the obtained solution.

Processes (a) to (c) may be summarised as "building an optimization problem" and will henceforth be described as being carried out by an Optimization Problem Builder in accordance with an embodiment

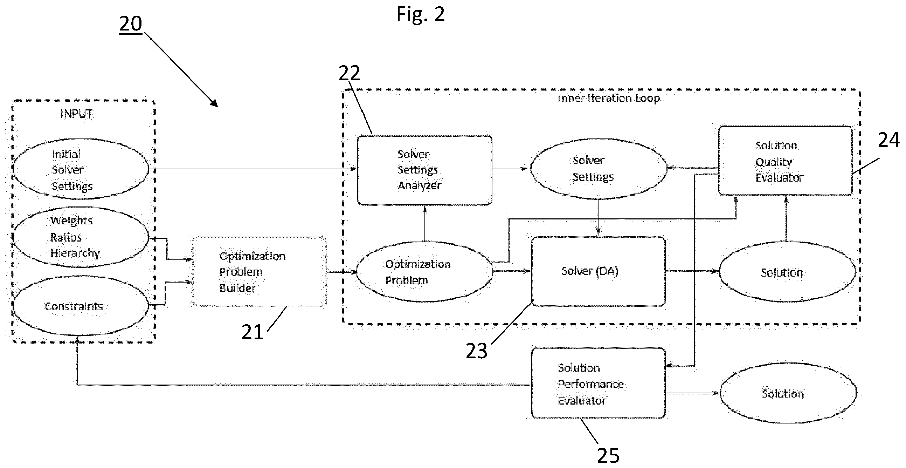

The architecture of a system 20 including an Optimization Problem Builder in accordance with an embodiment is shown in Figure 2 by way of example only.

There are five information processing modules in the system 20 of Figure 2: Optimization Problem Builder 21, Solver Settings Analyser 22, Solver 23, Solution Quality Evaluator 24 and Solution Performance Evaluator 25.

The input for the system 20 of Figure 2 has at least two components, Weights Ratios' Hierarchy and Constraints, and may include an optional third component, Initial Solver Settings.

Here, Weights Ratios' Hierarchy means the description of the weights' assignment problem based on target ratios between the weights. This includes:

- the number of objects weights are needed for,
- the hierarchy of objects,
- the target weight ratios between subsets of objects at each level of the hierarchy,
- (optionally) relative importance of the levels of hierarchy.

By Constraints is meant any set of constraints described in the form of equalities or inequalities containing weight variables. Where the objects are financial assets, this might be, for example, a constraint on the expected return from the portfolio. Additionally, the Constraints may include a trade-off between target ratios and constraints.

The Initial Solver Settings input is optional and depends on the choice of the Solver 23. For example, if the Solver 23 used is based on a Simulated Annealing algorithm, the Solver Settings input would include the initial temperature, the final temperature, the temperature dynamics mode, the number of steps, etc.

The Optimization Problem Builder 21 is a module that, for given Weights Ratios' Hierarchy and Constraints, returns an Optimization Problem. The Optimization Problem Builder 21 is developed in such a way that if no constraints are present, the optimal solution reflects exactly the target weight ratios specified in the Weights Ratios' Hierarchy, as long as it is possible within the search space. When some constraints are present, an optimal solution of the Optimization Problem satisfies the constraints (if the constraints do not contradict one another), whilst at the same time the weight ratios are as close to the target weight ratios as possible.

Note that there are many possible measures of the distance between obtained weight ratios and the target weight ratios. In the examples described below a quadratic function is used as a distance measure/function. If relative importance of the levels of hierarchy is specified, the distance function will reflect that.

The Solver Settings Analyser 22 is a module that is responsible for computing the Solver Settings for the first run. The choice of settings (parameters) is guided by the Initial Solver Settings input (if any) and the Optimization Problem. If a parameter is present in the Initial Solver Settings, it is used directly. Otherwise the properties of the Optimization Problem are analysed to obtain the parameter. For example, if Simulated Annealing is used as the Solver 23, the initial temperature has to be specified. This may be derived from the Optimization Problem, e.g. by sampling the cost (energy) function for random solutions and estimating the maximal value of the function.

The Solver module 23 is responsible for finding the optimal solution to the Optimization Problem. The only requirement for the exact method is that it accepts the Optimization Problem description in the form generated by the Optimization Problem Builder module 21. An example is a Simulated Annealing meta-heuristic method, which works with arbitrary black-box cost functions with integer decision variables. The Solver module 23 returns the values of the decision variables, which in this case are weights for the Weights Ratios' Hierarchy problem.

The Solution Quality Evaluator module 24 is responsible for evaluating if the returned portfolio is the optimal solution of the Optimization Problem, and if not, calculating new parameters to obtain a better result in the next round. If the solution quality is evaluated as satisfactory, then the solution is passed to the Solution Performance Evaluator module 25. For example, if a Solver 23 based on Simulated Annealing is used, and the returned solution's energy varies significantly, the final temperature may be lowered or the number of steps may be increased to increase the chance that the solver will reach a local minimum.

The Solution Performance Evaluator 25 is a module responsible for evaluating if the returned solution has the properties that were expected. For example, if the objects in the hierarchy are bicycle parts and a constraint has been set such that for a particular part there is a minimum order number, it may involve assessing whether that constraint has an adverse effect on the solution as a whole, such as reducing rather than increasing the number of bicycles completed. In another example, if the objects in the hierarchy are financial assets, it may involve a simulation of asset portfolio performance based on historic data, which may lead to changing how the constraints are specified in order to obtain a better performing portfolio in the next round of the outer iteration loop. If the solution performance is evaluated as being satisfactory, i.e. acceptable, that solution is returned as output of the system and is used in generating the control signal.

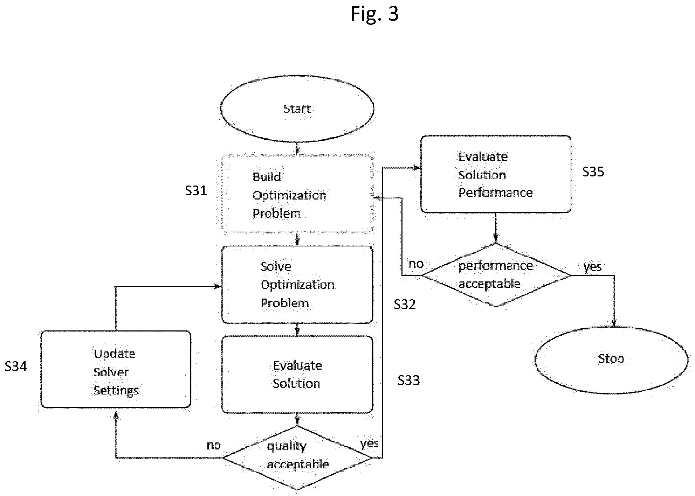

Figure 3 is a flowchart of the method carried out by the modules of the system of Figure 2. Step S31, carried out by the Optimization Problem Builder 21, is to build the optimization problem. Step S32, carried out by the Optimization Solver 22, is to solve the built optimization problem. Step S33, carried out by the Solution Quality Evaluator 24, is to evaluate the solution found by the Optimization Solver 23. If the solution quality is found to be unacceptable, then at Step S34 the solver settings are updated and the method returns to Step S32. If the solution quality is found to be acceptable, then at Step S35 the solution performance is evaluated, by the Solution Performance Evaluator 25, and if performance is found to be unacceptable the method returns to Step S31. On the other hand, if solution performance is found to be acceptable then the method concludes.

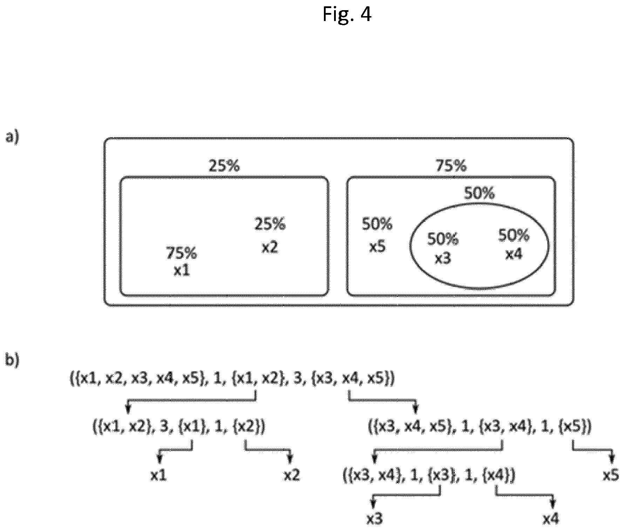

The Weights Ratios' Hierarchy problem to be solved may be defined as described below. Assume that there are n objects, and for each object a weight variable $x_i$ has to be determined. An example of a set of objects divided into components with weight variables $x1$ to $x5$ is shown in Figure 4(a). It is assumed that there is a known hierarchy of objects, as shown for example in Figure 4(b). By this we mean that there is a number, $L$, of levels of hierarchy (in Figure 4(b) L=4).

At the top level there is one component, described as a subset, which contains all of the objects. At each lower level, each of the components from the higher level that contains more than one object splits into at least two sub-components. The example shown in Figure 4(b) is a binary hierarchy, i.e. at each level each component containing more than one object divides into two lower level sub-components. The allocation of objects between the lower level sub-components is given as input and the allocation corresponds directly to the pre-assigned relative weights.

For example if at each level objects $C_i$ are split into two subcomponents $SC1_i$ and $SC2_i$, and the relative weights are $W1_i$ and $W2_i$, then the input to the Optimization Problem Builder is a list of the form below:

$$S = \{(C_i, W1_i, SC1_i, W2_i, SC2_i)\}_i$$

where each split $S$ of a component into subcomponents is described by:

$C_i$ - the subset of objects in the component
$SC1_i$ - the subsets of objects in the first subcomponent
$SC2_i$ - the subset of objects in the second subcomponent
$W1_i$ - relative weight of the first subcomponent
$W2_i$ - relative weight of the second subcomponent.

The goal of the optimization solver is to assign values to weight variables $x_i$ in such a way that for each split of a component into the new subcomponents, the ratio of total weights of the subcomponents is the same as the ratio between the target weights.

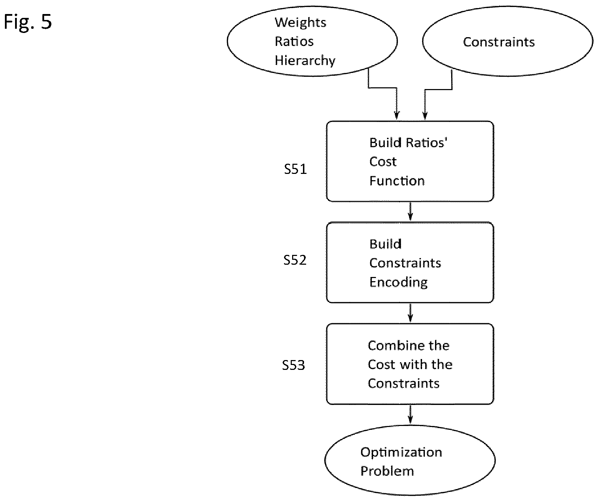

Figure 5 is a flowchart of the processes performed by the Optimization Problem Builder module 21, i.e. carried out in the step Build Optimization Problem in Figure 3. The purpose of these processes is to transform input data, i.e. the Weights Ratios Hierarchy and constraints, into a representation that is suitable for the chosen optimization solver.

The Weights Ratios' Hierarchy together with the constraints is input into the Optimization Problem Builder module 21 and transformed into a representation that is suitable for the chosen Optimization Solver 23. As shown in Figure 5, this may be done as follows:

- Step S51: Building the Cost function corresponding to the Weight Ratios' Hierarchy,

- Step S52: Encoding the Constraints according to the chosen solver (depending on the solver this step may be omitted; if required it may be carried out before, after or simultaneously with Step S51),
- Step S53: Combining the cost function and obtained constraints to obtain a valid optimization problem.

Step S51 - Building the cost function

In the example described here the cost function corresponding to the Weights Ratios' Hierarchy is built as a sum, with each element of the sum corresponding to a single split of a component into subcomponents. The cost function may take various other forms depending on the optimization solver to be used, but often a sum is the most natural choice. A distance measure, in this example a quadratic distance measure, is used to calculate the distance from the perfect weights' ratio. Namely, for the split $S$ above, the cost function element is

$$\sum_{C_i \in S} \left( W2_i \sum_{k \in SC1_i} x_k - W1_i \sum_{k \in SC2_i} x_k \right)^2$$

No constraints are imposed on the weights W1, W2. In this way a change in the relative importance of the sub-component splits may be introduced by manipulating the value of (W1+W2).

It is not essential to use a quadratic distance measure in the cost function. A different distance measure may be more suitable, depending on the observed performance of the optimization solver to be used.

In the case where a special purpose solver is used, which does not accept a continuous quadratic function as input, the cost function must be changed accordingly. For example, a discrete search space of pre-selected weights may be considered.

Step S52 - Encoding the Constraints (if necessary)

Any required constraints may be applied. In the worked examples described below, equality and inequality constraints are described with respect to the weight variables, but embodiments are not restricted to any particular form of constraint. For example, in real-world problems it is common to define constraints in the form of logical clauses (e.g. x_1<10 or x_2<10 as a single constraint). Additionally, if the weights are selected from a discrete space it is natural to define a constraint in the form of a truth table (e.g. defining allowed connections in a Traveling Salesperson Problem).

In this step, which may be omitted according to the optimization solver to be used, the constraints are encoded, i.e. adapted to a formulation supported by the optimization solver to be used. If the solver to be used fully supports constrained optimization, this step may be omitted and the constraints may be input to the solver without having been encoded. If the solver does not support certain constraints (such as an annealing solver which does not accept inequality constraints directly), these must be transformed into an appropriate form before input.

In the case where a special purpose optimization solver is used, which does not accept such constraints, a different encoding must be developed accordingly. For example, using a Genetic Algorithm based solver may require the development of special genetic operators that support the constraints.

Step S53 - Obtaining the Optimization Problem

The final step is to combine the cost function with the constraints (encoded as necessary) into a single optimization problem that is a valid input for the selected solver. In particular, this step uses the provided data on the ratios/constraints trade-off, and the data on the relative importance of the hierarchy levels, to build a single optimization problem that reflects the whole objective. For some solvers, combining the cost function with constraints may involve additional considerations. For example, solving a constrained function with an annealing solver requires encoding the constraints as penalty functions, and then during the combining so-called penalty factors must be chosen to ensure that it is impossible for the gain in cost to be smaller than the penalty when violating a constraint.

Embodiments may be applied to any problem where ratios between values of decision variables have to be as close to target values as possible. By way of illustration only, and without limitation, examples will now be described in which an embodiment is applied to managing amounts of parts in stock for a complex manufacturing process/retail operator, building diverse training sets for ethical AI systems, and selecting a financial assets portfolio.

The examples are described based on integer programming, but the system architecture is generic and may be also applied to mixed-integer formulations etc.

Similarly, although the examples are described using a hardware accelerated optimization, as the system architecture is generic any optimization solver may be used, including, but without limitation, simulated annealing, genetic algorithms, etc.

**Worked Example 1**

Consider a manufacturer's (wholesaler's) stock planning problem, where for reasons of efficiency and/or cost it is desirable to order/hold in stock a minimum number of parts required for certain products. In this simplified example it is assumed that it is concerned only with the number of parts of certain type, but the solution works in a similar way considering ratios between values, volumes etc. Assume that a factory manufactures (wholesaler sells parts for) adults' 2-wheel bikes and kids' 3-wheel bikes. Thus, the parts in stock, for which weight variables $x_i$ are required, are:

- 2-wheel frames
- 3-wheel frames
- Small Wheels
- Large wheels
- Cargo racks

The desired stock ratios give a hierarchy. There are two main categories:
(3-wheel frames, Small Wheels) and (2-wheel frames, Large wheels, Cargo racks).
The ratio R between the main categories is the ratio of kids'/adults' bikes, which may be chosen freely:
w(3-wheel frames, Small Wheels) : w(2-wheel frames, Large wheels, Cargo racks) = R.
The ratios of parts within categories reflect the builds of the bikes.

w(3-wheel frames): w(Small Wheels) = 1 : 3.
w(2-wheel frames, Cargo racks) : w(Large Wheels) = 1 : 1.
w(2-wheel frames) : w(Cargo racks)= 1 : 1.
If R=2, and the total number of parts is equal to 60, the problem has a unique solution:
$x_1$ = N(3-wheel frames) = 10
$x_2$ = N(Small Wheels) = 30
$x_3$ = N(2-wheel frames) = 5
$x_4$ = N(Large wheels) = 10
$x_5$ = N(Cargo racks) = 5,
where N(.) is the number of parts of certain type in stock.

However, if a constraint is set that the minimum order size for the small wheels is 36, the problem no longer has a solution that satisfies all of the ratios perfectly. Thus, the problem may be regarded as an optimization problem to find the closest solution.
If the data is input into the system, a valid optimization problem is obtained:

$$min_{x_1,x_2,x_3,x_4,x_5}((x_1 + x_2) - 2(x_3 + x_4 + x_5))^2 + (3x_1 - x_2)^2 + (x_3 + x_5 - x_4)^2 + (x_3 - x_5)^2$$

subject to

$$x_1 + x_2 + x_3 + x_4 + x_5 = 60$$

$$x_2 - 36 \geq 0$$

If an Optimization Solver is used to solve the problem, a solution $x_1$ = 8, $x_2$ = 36, $x_3$ = 4, $x_4$ = 8, $x_5$ = 4. is obtained. The solution does not reflect the target ratios perfectly, but gives a solution that is as close as possible given the constraints and the chosen distance measure.
If a solution that satisfies the constraints is not obtained, the parameters of the solver method should be changed.
The solution may be verified by performance evaluation. If the performance is not in the line with what the constraints were supposed to achieve, the constraints may be changed. In particular, if more than one weight ratio does not match the target value, the relative weight values ($W$1 + $W$2) may be modified to change the relative importance of the ratios.

Once the solution has been verified, it may be used for example to determine a control signal for a device for ordering in new stock, and/or controlling a manufacturing process, or the like.

**Worked Example 2**

Consider a problem of building a diverse training set for an ethical AI system. The goal is to select the number of data points included in the training set from each of the subsets of points exhibiting certain features. Assume that the data points may be divided into two main categories, A and B, that the first category A may be further divided into two sub-categories A1 and A2, and that the second category B may be divided into three sub-categories B1, B2 and B3.

In this example, for the AI system to be considered fair, any bias related to the main category must be avoided. Thus, the weight ratios of the main categories A and B should be equal:

w(A) : w(B) = 1 : 1.

The same should be true for the sub-categories:

w(A1) : w(A2) = 1 : 1,
w(B1) : w(B2) : w(B3) = 1 : 1 : 1.

This problem has a valid solution that can be found with a simple algorithm.

However, this is not the case if the problem is extended with a constraint. Assume that there is evidence that the bias of the AI system may be traced back to unbalanced numbers of points corresponding to certain sub-categories, e.g. A1 and B3. In this case it is desirable to include the constraint:

w(A1) = w(B3).

This extended problem does not have a perfect solution. The goal now is to find a solution that is as close as possible to the target weight ratios, satisfying the additional constraints. This problem may be solved by the proposed system.

When the data is input into the optimization problem builder module, a valid optimization problem is obtained:

$$min_{x_1,x_2,x_3,x_4,x_5}((x_1 + x_2) - (x_3 + x_4 + x_5))^2 + (x_1 - x_2)^2 + (2x_3 - (x_4 + x_5))^2$$
$$+ (x_4 - x_5)^2$$

subject to

$$x_1 - x_5 = 0.$$

A solution to the optimization problem is obtained using an Optimization Solver. The solution may not reflect the target ratios perfectly, but may give a solution that is as close as possible given the constraints and the chosen distance measure.

If a solution that satisfies the constraints is not obtained, the parameters of the solver method should be changed.

The solution may be verified by performance evaluation. If the performance is not in the line with what the constraints were supposed to achieve, the constraints may be changed. In particular, if more than one weight ratio does not match the target value, the relative weight values ($W1 + W2$) may be modified to change the relative importance of the ratios.

Once the solution has been verified, it may be used for example to determine a control signal for a device used for training an AI system.

**Worked Example 3**

A financial instruments' portfolio selection model assumes that there is a set of assets, and the goal is to determine how much of the total portfolio value should be invested in each of the assets. There are many possible criteria for portfolio evaluation. The one that considered in this example is concerned mostly about maximizing the returns/risk ratio.

One of the foundations of modern portfolio theory is the mean-variance model. The model is based on processing mean and covariance of the returns of the assets. The model has great potential in theory, but the reliance on the accuracy of the estimation of the input parameters is its main weakness.

One alternative way of defining the conditions for the desired portfolio is by calculating hierarchical risk parity weight ratios. The method is based on analyzing the correlations between asset prices and building a hierarchy of clusters that reflects how closely together the assets are in terms of price co-dependence. The process to select assets in the portfolio may be done by optimization or by a deterministic algorithm.

Current state-of-the-art methods for using hierarchical ratios for portfolio selection are based on using machine learning methods for ratios' calculation and deterministic weights computation. However, the deterministic weights computation cannot be easily integrated with any additional requirements on the portfolio that the user may need.

The only existing workaround is based on post-processing of the output of the unconstrained portfolio selection algorithm, which works with only a fixed family of simple constraints, and does not allow any flexibility in finding the trade-off between the additional constraints and the computed ratios, or any flexibility on how important particular levels of hierarchy should be.

Using an optimization solver for portfolio optimization gives good quality portfolios (unlike the Markovitz model of portfolio optimization), and allows the constraints required by the customer to be included (unlike the QHRP method by 1Qbit). Until now it was possible to have either good performance (QHRP method) or arbitrary constraints (Markovitz model), but not both.

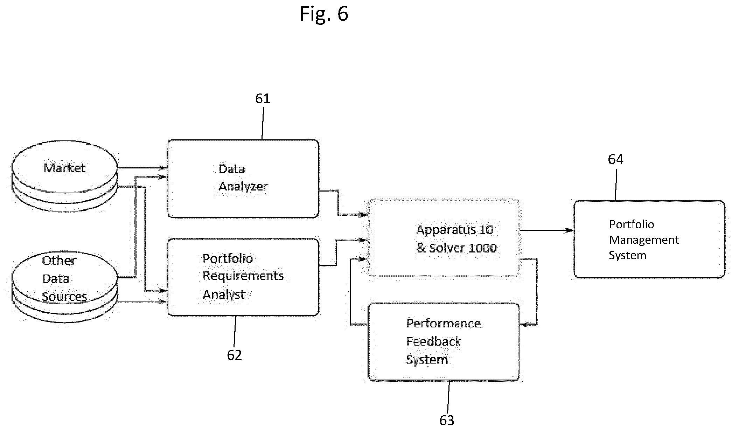

Figure 6 illustrates an exemplary system in which an embodiment may be used to obtain a control signal for controlling selection of financial assets for an asset portfolio.

In addition to apparatus 10 according to an embodiment and optimization solver 1000, the system of Figure 6 comprises a data analyzer 61, a portfolio requirements analyst 62, a performance feedback system 63 and a portfolio management system 64. The data analyzer 61 and the portfolio requirements analyst 62 each have data inputs from financial markets databases and other data sources and feed information for determining the desired solution into the apparatus 10, which in turn builds an optimization problem which is input into optimization solver 1000. The solution output by the apparatus 10 is fed back via the performance feedback system 63 for assessment, and when deemed acceptable is output to the portfolio management system 64.

For example, consider a portfolio selection problem with three assets, 1, 2 and 3. A hierarchy of the assets, based on correlations between prices of the assets, may be defined by the splits into the subcomponents as follows:

(1, 2, 3) -> (1, 2), (3)
(1, 2) -> (1), (2)

In this example assume that the correlation factors between asset prices suggest that the optimal weight ratios are:

for w(1, 2) : w(3) = 4 : 3
for w(1) : w(2) = 1 : 1

Thus the input to the system is of the form
{
({1,2, 3}, 4, {1,2}, 3, {3}),
({1,2}, 1, {1}, 1, {2})
}

A solution to this problem would be $x_1 = 2$, $x_2 = 2$, $x_3 = 3$.

Now assume in this example that there is a market regulation that may be expressed as an equality constraint on the weights of the assets:

$$10x_1 - 11x_2 = 0$$

This constraint is inconsistent with the target ratios. However, if the data is input into the system a valid optimization problem may be obtained as follows:

$$min_{x_1,x_2,x_3} (x_1 - x_2)^2 + (3x_1 + 3x_2 - 4x_3)^2$$

subject to

$$10x_1 - 11x_2 = 0$$

If an Optimization Solver is used to solve the problem, a solution $x_1 = 44$, $x_2 = 40$, $x_3 = 63$. is obtained. The solution does not reflect the target ratios perfectly, but gives a solution that is as close as possible given the constraints and the chosen distance measure.

If a solution satisfying the constraints is not obtained, the parameters of the solver method should be changed.

The solution may be verified by performance evaluations. If the performance is not in the line with what the constraints were supposed to achieve, the constraints may be changed. In particular, if more than one weight ratio does not match the target value, the relative weight values ($W1 + W2$) may be modified to change the relative importance of the ratios.

Once the solution has been verified, it may be used for example to determine a control signal for controlling an asset trading system or the like.

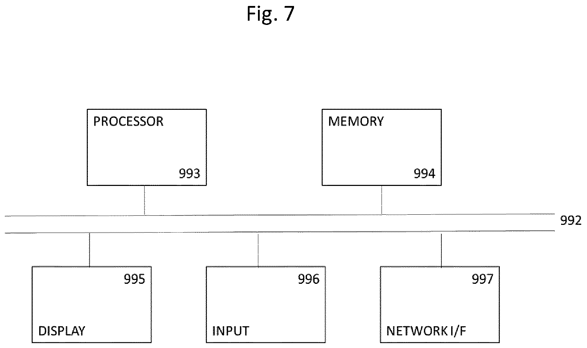

Figure 7 is a block diagram of a computing device which embodies the present invention, and which may be used to implement some or all of the operations of a method embodying the present invention, and perform some or all of the tasks of apparatus of an embodiment. For example, the computing device of Figure 7 may be used to implement all the tasks of the apparatus 10 illustrated in Figure 1, or of the optimisation problem builder module 21 illustrated in Figure 2, or of all modules in the system 20 illustrated in Figure 2, and/or perform all the operations of the method shown in Figure 3, or only to implement one or more of the processes described with reference to Figure 1, 2, 3, 5 and/or 6.

The computing device comprises a processor 993 and memory 994. Processor 993 may for example serve as processor 11 of apparatus 10 and/or one or more of modules 21 to 25 of system 20. Optionally, the computing device also includes a network interface 997 for communication with other such computing devices, for example with other computing devices of invention embodiments, or one or more optimisation solvers.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994, which may serve as memory 12 of apparatus 10, may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing all the tasks or functions to be performed by apparatus 10 illustrated in Figure 1, or each or all of the various modules in the system 20 illustrated in Figure 2, or performing all the operations of the method shown in Figure 3, or only to implement one or more of the processes described with reference to Figure 1, 2, 3, 5 and/or 6. And such instructions may be executed by one or more processor 993. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 1, 2, 3, 5 and/or 6 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device and may also display a cursor and dialog boxes and screens enabling interaction between a user and the programs and data stored on the computing device. The input mechanisms 996 may enable a user to input data, such as the source code to be processed, and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 7. Such a computing device need not have every component illustrated in Figure 7, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

**Claims**

1. A computer-implemented method of generating a control signal to control a device comprising:

   for a given weight ratio hierarchy comprising a predefined hierarchy of a set of objects having at least one level of subsets of the objects, where the subsets in each level have preselected relative weights, the weight ratio hierarchy further comprising at least one target weight ratio between weight variables of objects at the at least one level of the predefined hierarchy, generating a cost function corresponding to the weight ratio hierarchy such that, for an optimal solution of the cost function, a ratio of values for weight variables of the objects in the at least one level will be equal to the at least one target weight ratio for the at least one level;
   obtaining at least one predefined constraint related to the weight variables in a formulation in accordance with input requirements of an optimization solver to be used in the method;
   combining the cost function and each obtained constraint in such a way as to obtain an optimization problem which, when input into the optimization solver, may have an optimal, or close to optimal, solution satisfying the at least one predefined constraint;
   inputting the optimization problem into the optimization solver and obtaining a solution output by the optimization solver, the solution comprising values for the weight variables; and
   generating the control signal to control the device in accordance with the obtained solution.

2. A method as claimed in claim 1, wherein obtaining the solution output by the solver comprises:

   evaluating the quality of a solution output by the solver against at least one preset quality criterion;
   when the quality of the solution does not meet the at least one preset quality criterion, rejecting the solution, changing parameters of the optimization solver, and causing the optimization solver to output another solution; and
   when the quality of the solution meets the preset quality criterion, determining that the solution is of satisfactory quality.

3. A method as claimed in claim 2, further comprising, when the solution is determined to be of satisfactory quality:

   evaluating the performance of the solution against at least one preset performance criterion;
   when the performance does not meet the at least one preset performance criterion, rejecting the solution, altering the optimization problem by changing at least one of the predefined constraint and the preselected relative weights, and causing the altered optimization problem to be input into the optimization solver; and
   when the performance meets the at least one preset performance criterion, determining that the solution is acceptable.

4. A method as claimed in claim 1, 2 or 3, wherein the weight ratio hierarchy comprises target weight ratios between weight variables of objects at each level of the predefined hierarchy, and generating a cost function corresponding to the weight ratio hierarchy comprises determining values for weight variables of the objects in each level such that, for each level, a ratio of weight variables of objects in the level is equal to the target weight ratio for the level.

5. A method as claimed in any one of claims 1 to 4, wherein the objects are parts of an item to be manufactured and the device controls a process used in manufacturing the item.

6. A method as claimed in any one of claims 1 to 4, wherein the objects are data points for use in training an AI system and the device is for use in training an AI system.

7. A method as claimed in any one of claims 1 to 4, wherein the objects are financial assets and the device is a financial portfolio management system.

8. A computer program comprising instructions which, when the program is executed by a computer, causes that computer to carry out the method of any preceding claim.

9. Apparatus to generate a control signal to control a device, the apparatus comprising:

at least one processor; and
at least one memory storing a weight ratio hierarchy comprising a predefined hierarchy of a set of objects having at least one level of subsets of the objects, where the subsets in each level have preselected relative weights, the weight ratio hierarchy further comprising at least one target weight ratio between weight variables of objects at the at least one level of the predefined hierarchy,
the at least one memory further storing instructions to cause the processor to:

generate a cost function corresponding to the weight ratio hierarchy such that, for an optimal solution of the cost function, a ratio of values for weight variables of the objects in the at least one level will be equal to the at least one target weight ratio for the at least one level;
obtain at least one predefined constraint related to the weight variables in a formulation in accordance with input requirements of an optimization solver to be used;
combine the cost function and each obtained constraint in such a way as to obtain an optimization problem which, when input into the optimization solver, may have an optimal, or close to optimal, solution satisfying the at least one predefined constraint;
input the optimization problem into the optimization solver and obtain a solution output by the optimization solver, the solution comprising values for the weight variables; and
generate the control signal to control the device in accordance with the obtained solution.

10. Apparatus as claimed in claim 9, wherein the instructions to cause the processor to obtain the solution output by the solver comprise instructions to:

evaluate the quality of a solution output by the solver against at least one preset quality criterion;
when the quality of the solution does not meet the at least one preset quality criterion, reject the solution, change parameters of the optimization solver, and cause the optimization solver to output another solution; and
when the quality of the solution meets the preset quality criterion, determine that the solution is of satisfactory quality.

11. Apparatus as claimed in claim 10, wherein the instructions further comprise instructions to:

evaluate the performance of the solution against at least one preset performance criterion when the solution is determined to be of satisfactory quality;
when the performance does not meet the at least one preset performance criterion, reject the solution, alter the optimization problem by changing at least one of the predefined constraint and the preselected relative weights, and cause the altered optimization problem to be input into the optimization solver; and
when the performance meets the at least one preset performance criterion, determine that the solution is acceptable.

12. Apparatus as claimed in claim 9, 10 or 11, wherein the weight ratio hierarchy comprises target weight ratios between weight variables of objects at each level of the predefined hierarchy, and generating a cost function corresponding to the weight ratio hierarchy comprises determining values for weight variables of the objects in each level such that, for each level, a ratio of weight variables of objects in the level is equal to the target weight ratio for the level.

13. Apparatus as claimed in any one of claims 9 to 12, wherein the objects are parts of an item to be manufactured and the device controls a process used in manufacturing the item.

14. Apparatus as claimed in any one of claims 9 to 12, wherein the objects are data points for use in training an AI

system and the device is for use in training an AI system.

**15.** Apparatus as claimed in any one of claims 9 to 12, wherein the objects are financial assets and the device is a financial portfolio management system.

**Amended claims in accordance with Rule 137(2) EPC.**

**1.** A computer-implemented method of generating a control signal to control a device for building a diverse training data set for training an ethical artificial intelligence

- AI - system using a set of data points, the method comprising:

for a given weight ratio hierarchy comprising a predefined hierarchy of the set of data points having at least one level of subsets of the data points, where the subsets in each level have preselected relative weights, the weight ratio hierarchy further comprising at least one target weight ratio between weight variables of data points at the at least one level of the predefined hierarchy, the at least one target weight ratio representing a distribution of the data points across the subsets at the at least one level which has been predetermined as being necessary to achieve diversity in the training set, generating a cost function corresponding to the weight ratio hierarchy such that, for an optimal solution of the cost function, a ratio of values for weight variables of the data points in the at least one level will be equal to the at least one target weight ratio for the at least one level;
obtaining at least one predefined constraint related to the weight variables in a formulation in accordance with input requirements of an optimization solver to be used in the method, the constraint having been defined to avoid a particular bias toward a certain subset of data points in the training set;
combining the cost function and each obtained constraint in such a way as to obtain an optimization problem which, when input into the optimization solver, may have an optimal, or close to optimal, solution satisfying the at least one predefined constraint;
inputting the optimization problem into the optimization solver and obtaining a solution output by the optimization solver, the solution comprising values for the weight variables; and
generating the control signal to control the device in accordance with the obtained solution thereby to build the diverse training set.

**2.** A method as claimed in claim 1, wherein obtaining the solution output by the optimization solver comprises:

evaluating the quality of a solution output by the optimization solver against at least one preset quality criterion;
when the quality of the solution does not meet the at least one preset quality criterion, rejecting the solution, changing parameters of the optimization solver, and causing the optimization solver to output another solution; and
when the quality of the solution meets the preset quality criterion, determining that the solution is of satisfactory quality.

**3.** A method as claimed in claim 2, further comprising, when the solution is determined to be of satisfactory quality:

evaluating the performance of the solution against at least one preset performance criterion;
when the performance does not meet the at least one preset performance criterion, rejecting the solution, altering the optimization problem by changing at least one of the predefined constraint and the preselected relative weights, and causing the altered optimization problem to be input into the optimization solver; and
when the performance meets the at least one preset performance criterion, determining that the solution is acceptable.

**4.** A method as claimed in claim 1, 2 or 3, wherein the weight ratio hierarchy comprises target weight ratios between weight variables of data points at each level of the predefined hierarchy, and generating a cost function corresponding to the weight ratio hierarchy comprises determining values for weight variables of the data points in each level such that, for each level, a ratio of weight variables of data points in the level is equal to the target weight ratio for the level.

**5.** A computer program comprising instructions which, when the program is executed by a computer, causes that computer to carry out the method of any preceding claim.

6. Apparatus (10) to generate a control signal to control a device for building a diverse training data set for training an ethical artificial intelligence - AI - system using a set of data points, the apparatus (10) comprising:

   at least one processor (11); and
   at least one memory (12) storing a weight ratio hierarchy comprising a predefined hierarchy of a set of data points having at least one level of subsets of the data points, where the subsets in each level have preselected relative weights, the weight ratio hierarchy further comprising at least one target weight ratio between weight variables of data points at the at least one level of the predefined hierarchy, the at least one target weight ratio representing a distribution of the data points across the subsets at the at least one level which has been predetermined as being necessary to achieve diversity in the training set,
   the at least one memory (12) further storing instructions to cause the processor (11) to:

   generate a cost function corresponding to the weight ratio hierarchy such that, for an optimal solution of the cost function, a ratio of values for weight variables of the data points in the at least one level will be equal to the at least one target weight ratio for the at least one level;
   obtain at least one predefined constraint related to the weight variables in a formulation in accordance with input requirements of an optimization solver (1000) to be used, the constraint having been defined to avoid a particular bias toward a certain subset of data points in the training set;
   combine the cost function and each obtained constraint in such a way as to obtain an optimization problem which, when input into the optimization solver (1000), may have an optimal, or close to optimal, solution satisfying the at least one predefined constraint;
   input the optimization problem into the optimization solver (1000) and obtain a solution output by the optimization solver (1000), the solution comprising values for the weight variables; and
   generate the control signal to control the device in accordance with the obtained solution thereby to build the diverse training set.

7. Apparatus as claimed in claim 6, wherein the instructions to cause the processor (11) to obtain the solution output by the optimization solver (1000) comprise instructions to:

   evaluate the quality of a solution output by the optimization solver (1000) against at least one preset quality criterion;
   when the quality of the solution does not meet the at least one preset quality criterion, reject the solution, change parameters of the optimization solver (1000), and cause the optimization solver (1000) to output another solution; and
   when the quality of the solution meets the preset quality criterion, determine that the solution is of satisfactory quality.

8. Apparatus as claimed in claim 7, wherein the instructions further comprise instructions to:

   evaluate the performance of the solution against at least one preset performance criterion when the solution is determined to be of satisfactory quality;
   when the performance does not meet the at least one preset performance criterion, reject the solution, alter the optimization problem by changing at least one of the predefined constraint and the preselected relative weights, and cause the altered optimization problem to be input into the optimization solver (1000); and
   when the performance meets the at least one preset performance criterion, determine that the solution is acceptable.

9. Apparatus as claimed in claim 6, 7 or 8, wherein the weight ratio hierarchy comprises target weight ratios between weight variables of data points at each level of the predefined hierarchy, and generating a cost function corresponding to the weight ratio hierarchy comprises determining values for weight variables of the data points in each level such that, for each level, a ratio of weight variables of data points in the level is equal to the target weight ratio for the level.

Fig. 1

10

WEIGHT RATIO HIERARCHY

CONSTRAINT(S)

11  PROCESSOR

12  MEMORY

1000  SOLVER

CONTROL
SIGNAL

100  DEVICE

Fig. 2

Fig. 3

EP 4 016 404 A1

Fig. 4

EP 4 016 404 A1

Fig. 5

Weights
Ratios
Hierarchy

Constraints

S51 — Build Ratios' Cost Function

S52 — Build Constraints Encoding

S53 — Combine the Cost with the Constraints

Optimization Problem

EP 4 016 404 A1

Fig. 6

Fig. 7

PROCESSOR 993

MEMORY 994

992

995
DISPLAY

996
INPUT

997
NETWORK I/F

Europäisches
Patentamt

European
Patent Office

Office européen
des brevets

# EUROPEAN SEARCH REPORT

**Application Number**

EP 20 21 4730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/033194 A1 (FERGUSON BRUCE [US] ET AL) 13 February 2003 (2003-02-13) * paragraph [0241]; claim 16 * ----- | 1-15 | INV. G06Q10/00 |
| A | EP 3 260 934 A2 (GEN ELECTRIC [US]) 27 December 2017 (2017-12-27) * paragraph [0025] - paragraph [0052] * ----- | 1-15 | |
| A | EP 3 261 209 A1 (SIEMENS AG [DE]) 27 December 2017 (2017-12-27) * paragraph [0031] - paragraph [0032] * ----- | 1-15 | |
| A | WO 2020/032947 A1 (SIEMENS AG [DE]; SIEMENS CORP [US]) 13 February 2020 (2020-02-13) * paragraph [0055] - paragraph [0057] * ----- | 1-15 | |

**TECHNICAL FIELDS SEARCHED (IPC)**

G06Q
H02J
G05B

The present search report has been drawn up for all claims

| Place of search | Date of completion of the search | Examiner |
|---|---|---|
| Munich | 28 April 2021 | Yotova, Polina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 4730

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2021

| Patent document cited in search report | | Publication date | Patent family member(s) | | Publication date |
|---|---|---|---|---|---|
| US 2003033194 | A1 | 13-02-2003 | EP<br>US<br>US<br>WO | 1428153 A1<br>2003033194 A1<br>2003078683 A1<br>03021490 A1 | 16-06-2004<br>13-02-2003<br>24-04-2003<br>13-03-2003 |
| EP 3260934 | A2 | 27-12-2017 | EP<br>US | 3260934 A2<br>2017364043 A1 | 27-12-2017<br>21-12-2017 |
| EP 3261209 | A1 | 27-12-2017 | NONE | | |
| WO 2020032947 | A1 | 13-02-2020 | NONE | | |

EPO FORM P0459

For more details about this annex : see Official Journal of the European Patent Office, No. 12/82